# EUROPEAN PATENT APPLICATION

(11) **EP 3 181 535 A1**
(43) Date of publication of application: **21.06.2017**
(21) Application number: 15290315.9
(22) Date of filing: 15.12.2015
(51) Int. Cl.: C04B 28/02, C09K 8/46

(54) **METHODS FOR MEASURING AIR ENTRAINMENT IN A COMPOSITION**

(71) Applicant: Services Pétroliers Schlumberger, 75007 Paris (FR); Schlumberger Holdings Limited, Road Town, Tortola (VG); Schlumberger Technology B.V., 2514 JG The Hague (NL)
(72) Inventor: CARELLI, Clara, 92140 Clamart (FR); LE ROY-DELAGE, Sylvaine, 92140 Clamart (FR); PIOT, Bernard, 92140 Clamart (FR)
(74) Representative: Leonori, Céline

(57) **Abstract**

Methods for measuring air entrainment in a composition comprise providing a rotational blade mixer having a container. A cement slurry containing an air entrainment suppressing agent is prepared in the mixer. The density of the slurry is then measured with a mud balance and compared to a theoretical slurry density calculated from the known weights and volumes of the cement slurry ingredients. The air entrainment suppressing agent comprises a blend of polypropylene glycol and a silicone, or a silicone that is functionalized with ether groups.

## Description

### BACKGROUND

The statements in this section merely provide background information related to the present disclosure and may not constitute prior art.

This disclosure relates to cement compositions and methods for designing the compositions. During the construction of subterranean wells, it is

common, during and after drilling, to place a tubular body in the wellbore. The tubular body may comprise drillpipe, casing, liner, coiled tubing or combinations thereof. The purpose of the tubular body is to act as a conduit through which desirable fluids from the well may travel and be collected, or fluids may be injected into the well. The tubular body is normally secured in the well by a cement sheath.

The cement sheath is placed in the annular region between the outside of the tubular body and the subterranean borehole wall by pumping the cement slurry down the interior of the tubular body, which in turn exits the bottom of the tubular body and travels up into the annulus. The cement slurry may also be placed by the "reverse cementing" method, whereby the slurry is pumped directly down into the annular space.

The cement sheath provides mechanical support and hydraulic isolation between the zones or layers that the well penetrates. The latter function is prevents hydraulic communication between zones that may result in contamination. For example, the cement sheath blocks fluids from oil or gas zones from entering the water table and contacting drinking water. In addition, to optimize a well's production efficiency, it may be desirable to isolate, for example, a gas-producing zone from an oil-producing zone. The cement sheath achieves hydraulic isolation because of its low permeability. In addition, intimate bonding between the cement sheath and both the tubular body and borehole prevents leaks.

Cement slurry preparation may be performed by either batch mixing or continuous mixing. During batch mixing, the cement slurry ingredients are combined in a tank that provides sufficient agitation to form a homogenous mixture. The tank may be sufficiently large to accommodate the entire slurry volume to be placed in the well, or the required slurry volume may be prepared in more than one tank. Continuous (or "on-the-fly") mixing is a process during which the liquid and solid components of the slurry are combined and exposed to a high-shear environment to form a homogeneous mixture. The slurry is immediately pumped into the well. Thus, the slurry is formed at a rate equal to the pumping rate. Continuous mixing is logistically advantageous because less time is required to prepare the slurry, and the process avoids the preparation of an excess slurry volume that the operator would have to dispose of.

The intense shear environment associated with continuous mixing may cause air entrainment and slurry foaming. A jet mixer may be used in which a regulated flow of solids into the mixer is obtained by creating a void that sucks the dry powder into the mixing fluid stream by the venturi effect. Any air entrainment should be removed before the slurry is pumped downhole. Excessive slurry foaming may have several undesirable consequences. Slurry gelation may result, and loss of hydraulic pressure during pumping may occur owing to cavitation in the mixing system. In addition, air entrainment may cause higher-than-desired slurry densities. During slurry mixing a densitometer is used to help field personnel proportion the ingredients. If air is present in the slurry at the surface, the density of the system "cement + water + air" is measured. Because the air becomes compressed downhole, the densitometer may underestimate the true downhole slurry density. More information concerning cement slurry mixing in the context of well cementing may be found in the following publication. Leugemors E, Metson J, Pessin J-L, Colvard RL, Krauss CD and Plante M: "Cementing Equipment and Casing Hardware," in Nelson EB and Guillot D (eds.): Well Cementing-2nd Edition, Houston, Schlumberger (2006) 343-362.

To minimize air entrainment and foaming, antifoam agents may be added to the mixing fluid or dry blended with the cement solids. Antifoam agents produce a shift in surface tension, alter the dispersibility of solids, or both, so that the conditions required to produce a foam are no longer present.

In well cementing, two classes of antifoam agents are commonly used: polyglycol ethers and silicones. In current practice one type of antifoam agent is used (i.e., either polyglycol ethers or silicones) in a particular cement slurry. Very small concentrations may achieve adequate foam prevention, often lower than 0.1% by weight I of water (BWOW). Indeed, antifoam agents tend to be used sparingly, not only for economic reasons, but also because adding excessive amounts of antifoam agents may actually stabilize a foam and make the problem worse.

Polypropylene glycol (PPG) is most frequently used because of its lower cost and effectiveness in most situations; however, optimal results are obtained when PPG is added to the system before mixing. The silicones are highly effective antifoaming and defoaming agents. They are often suspensions of finely divided silica particles dispersed in polydimethylsiloxane or similar silicones. Unlike the polyglycol ethers, silicones can destroy a foam regardless of when they are added to the system.

In recent years, new cementing technologies have been introduced wherein high concentrations of organic polymer particles are present in cement slurries. Such particles may be used to impart set cement flexibility. Or, the particles may be used to form so-called self-healing cements. Various organic polymers may swell in the presence of wellbore fluids such as hydrocarbons, carbon dioxide or hydrogen sulfide. If the cement sheath fails during the well's lifetime, polymer swelling upon exposure to one or more the wellbore fluids may seal cracks or voids in the cement sheath, thereby restoring zonal isolation.

Many of the organic polymers are hydrophobic and may be difficult to incorporate in the cement slurry during continuous mixing. This may cause excessive air entrainment. This problem may be further exacerbated by the presence of latexes that are used to prevent wellbore problems such as annular fluid migration. Also, water soluble polymers may be added to impart fluid-loss control. Such additives may increase mixing fluid viscosity, favoring the creation of more stable foams.

To further minimize the air entrainment and foaming problems, new cementing equipment has been developed. For example, the Slurry Air Separator (SAS), developed by Schlumberger, uses the hydrocyclone principle to separate entrained air from the cement slurry during the mixing process. Nevertheless, when high concentrations of hydrophobic particles are present, mixing difficulties may still persist. Under these circumstances it may not be possible to perform continuous mixing at a reasonable rate.

Another difficulty is that such mixing problems may not be identified during laboratory tests. Most practitioners employ a recommended mixing procedure published by the American Petroleum Institute. Recommended Practice for Testing Well Cements, American Petroleum Institute Publication 10B-2, 2nd Edition, July 2013. Applicant has found this method unable to reliably identify foaming and air entrainment problems when mixing slurries containing high concentrations of hydrophobic particles.

### SUMMARY

In an aspect, embodiments relate to methods for measuring air entrainment in a composition. A rotational blade mixer with a container is provided. An air entrainment suppressing agent is added to an aqueous fluid, thereby forming a mixing fluid with a known density and volume. The mixing fluid is placed in the container. A first rotational speed is chosen that is between 2000 and 12,000 RPM. The mixer is operated for a time period sufficient to expose the mixing fluid to at least 30,000 blade revolutions. Then, maintaining the first rotational speed, a solid blend comprising portland cement is placed in the container. The blend has a known density and absolute volume. The time required for the blend to be dispersed homogeneously in the mixing fluid is recorded. The mixer is then operated for 35 seconds at a second rotational speed of 12,000 RPM, thereby forming a slurry. Within one minute after the slurry has been formed, a slurry density measurement is performed with a mud balance at atmospheric pressure. The measured slurry density is then compared with a theoretical slurry density calculated from the known densities and volumes of the mixing fluid and solid blend.

In a further aspect, embodiments relate to methods for formulating a portland cement slurry. A first slurry composition is designed that contains an antifoam agent. The antifoam agent is either polypropylene glycol or a silicone. The air entrainment of the first slurry is measured. The measurement comprises the following procedure. A rotational blade mixer with a container is provided. An air entrainment suppressing agent is added to an aqueous fluid, thereby forming a mixing fluid with a known density and volume. The mixing fluid is placed in the container. A first rotational speed is chosen that is between 2000 and 12,000 RPM. The mixer is operated for a time period sufficient to expose the mixing fluid to at least 30,000 blade revolutions. Then, maintaining the first rotational speed, a solid blend comprising portland cement is placed in the container. The blend has a known density and absolute volume. The time required for the blend to be dispersed homogeneously in the mixing fluid is recorded. The mixer is then operated for 35 seconds at a second rotational speed of 12,000 RPM, thereby forming a slurry. Within one minute after the slurry has been formed, a slurry density measurement is performed with a mud balance at atmospheric pressure. The measured slurry density is then compared with a theoretical slurry density calculated from the known densities and volumes of the mixing fluid and solid blend.

A second slurry composition is designed that contains an air entrainment suppressing agent. The air entrainment suppressing agent is a blend of polypropylene glycol and a silicone, or a silicone that has been functionalized with ether groups. The air entrainment of the second slurry composition is measured using the same procedure as that employed for the first slurry composition, except that the antifoam agent is replaced by the air entrainment suppressing agent. The air entrainments of the first and second slurry composition are compared. If the air entrainment of the second slurry composition exceeds a desired amount, an iterative process commences wherein the concentration of the air entrainment suppressing agent is modified and the air entrainment is measured until the air entrainment is less than or equal to the desired amount.

This summary is provided to introduce a selection of concepts that are further described below in the detailed description. This summary is not intended to identify key or essential features of the claimed subject matter, nor is it intended to be used as an aid in limiting the scope of the claimed subject matter.

### DETAILED DESCRIPTION

In the following description, numerous details are set forth to provide an understanding of the present disclosure. However, it may be understood by those skilled in the art that the methods of the present disclosure may be practiced without these details and that numerous variations or modifications from the described embodiments may be possible.

At the outset, it should be noted that in the development of any such actual embodiment, numerous implementation-specific decisions are made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary of the disclosure and this detailed description, each numerical value should be read once as modified by the term "about" (unless already expressly so modified), and then read again as not so modified unless otherwise indicated in context. The term about should be understood as any amount or range within 10% of the recited amount or range (for example, a range from about 1 to about 10 encompasses a range from 0.9 to 11). Also, in the summary and this detailed description, it should be understood that a concentration range listed or described as being useful, suitable, or the like, is intended that any concentration within the range, including the end points, is to be considered as having been stated. For example, "a range of from 1 to 10" is to be read as indicating each possible number along the continuum between about 1 and about 10. Furthermore, one or more of the data points in the present examples may be combined together, or may be combined with one of the data points in the specification to create a range, and thus include each possible value or number within this range. Thus, even if specific data points within the range, or even no data points within the range, are explicitly identified or refer to a few specific, it is to be understood that inventors appreciate and understand that any data points within the range are to be considered to have been specified, and that inventors possessed knowledge of the entire range and the points within the range.

In this disclosure, Applicant discloses improved air entrainment suppressing agents that are particularly useful when preparing cement slurries that contain high concentrations of hydrophobic particles. The air entrainment suppressing agents may comprise a blend of a silicone and propylene glycol, or a silicone that is functionalized with ether groups. The functionalized silicones may have a linear structure 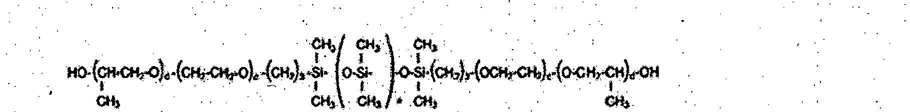 or a branched structure 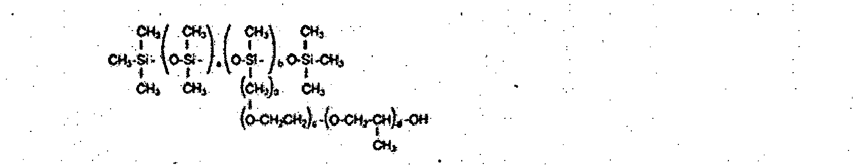 The ether groups may be characterized as a group (OC₃H₆)_{b}(OC₂H₄)ₐO(CH₂)_{c}, wherein a has a mean value between 0 and 16, b has a mean value between 0 and 12 and c is a number between 1 and 6, provided that a + b ≥ 1. The group may be grafted on the silicone backbone chain or used as mono- or di-terminal groups.

For both aspects, the silicone/propylene glycol blend may be present at a weight ratio between 80% silicone/20% polypropylene glycol and 20% silicone/80% polypropylene glycol. The polypropylene glycol may have a molecular weight between 1000 g/mol and 4000 g/mol, or between 2000 g/mol and 4000 g/mol. The silicone/polypropylene blend may be present in the composition at a concentration between 4 L/tonne of solids in the composition and 40 L/tonne of solids in the composition, or between 10 L/tonne of solids in the composition and 30 L/tonne of solids in the composition. In this disclosure the solids in the composition may also be referred to as the "blend."

For both aspects, the aqueous fluid may be fresh water, tap water, sea water, produced water or brines.

For both aspects, the functionalized silicone may be present at a concentration between 2 L/tonne of blend and 35 L/tonne of blend, or between 6 L/tonne of blend and 25 L/tonne of blend.

For both aspects, the composition may further comprise hydrophobic particles, latexes or water soluble polymers or combinations thereof.

For both aspects, the hydrophobic particles may comprise one or more members selected from the group consisting of rubber particles, polyamides, polypropylene, acrylonitrile butadiene rubbers, polyethylene, styrene butadiene, uintaite (also known by the commercial name GILSONITE), styrene isoprene styrene (SIS) rubber, styrene isoprene copolymers, styrene butadiene styrene (SBS) rubber, styrene divinylbenzene, fluoroelastomers, perfluoroelastomers, polyphenylene sulfide, polyether-etherketones, petroleum coke derivatives and coal. The hydrophobic particles may be present in a particle size range between 1 and 2000 micrometers, or between 50 and 1000 micrometers or between 80 and 850 micrometers. The hydrophobic particles may be present at a concentration between 10% by volume of blend (BVOB) and 55% BVOB, or between 15% BVOB and 40% BVOB. The hydrophobic particles may present in granular or fibrous form, or both.

For both aspects, the latexes may comprise styrene butadiene latexes, carboxylated styrene butadiene latexes, styrene acrylic latexes, acrylic latexes, isoprene latexes or natural rubber latexes or combinations thereof. The latexes may be present in the composition at concentrations between 35 and 500 L/tonne of blend, or between 80 and 350 L/tonne of blend, or between 80 and 300 L/tonne of blend.

For both aspects, the water soluble polymers may comprise cellulosic ethers, acrylates, polymers containing 2-acrylamido-2-methylpropane sulfonic acid (AMPS) and acrylamides, polysaccharides, polyvinyl alcohols, or crosslinked polyvinyl alcohols or combinations thereof. The polymers may be present in the composition at concentrations between 0.01% and 2.0% by weight of solids (BWOS), or between 0.015% and 1.5% BWOS, or between 0.02% and 1.3% BWOS.

For both aspects, the rotational blade mixer has a capacity of about one liter. Commercial examples of such mixers are WARING blenders (available from Conair Corporation, Stamford, CT) and the Model 3260 Constant Speed Mixer (available from Chandler Engineering, Broken Arrow, OK).

For both aspects, the solid blend may be added to the container within a time period shorter than 2 minutes or shorter than 1 minute. The time period is defined as the time necessary for the solids to be poured into the container and integrated within the liquid phase. In other words, no dry solids or lumps should be observed in the slurry after the time period. Time periods longer than two minutes are possible but not considered by Applicant to be a successful result.

For both aspects, the mud balance may be an atmospheric mud balance or a pressurized mud balance.

For both aspects, the composition may further comprise extenders, weighting agents, lost-circulation materials, dispersants, fluid-loss additives, antifoam agents, strength retrogression prevention additives, gas migration control agents, surfactants and gas generating agents.

The foregoing is further illustrated by reference to the following examples, which are presented for purposes of illustration and are not intended to limit the scope of the present disclosure.

### EXAMPLES

Cement slurries were prepared and tested according to the method described herein by Applicant, which differs from the recommended procedure published by the American Petroleum Institute (API RP10B). The API procedure specifies operating the mixer at 4000 RPM while the solids are added to the container, then increasing the speed to 12,000 RPM for 35 seconds. The mixing device was a Model 3260 Constant Speed Mixer. The cement used in each example was Dyckerhoff Class G. The cement slurries were prepared with tap water.

In these examples, Applicant chose an initial rotational speed of 4000 RPM and stirred the mixing fluid in the container for a time period of 10 minutes, thereby exposing the mixing fluid to 40,000 blade revolutions. Then, the mixing speed was increased to 12,000 RPM for 35 seconds.

### EXAMPLE 1

A test cement design (Flex 1) is shown in Table 1.

**Table 1. Composition of Flex 1 cement blend.**

| **Design Flex 1** | |
|---|---|
| **Theoretical Density** | 2000 kg/m³ |
| **Solid Volume Fraction (SVF)** | 52.2% |

| **Solid Blend** | |
|---|---|
| **Class G cement (% BVOB*)** | 36 |
| **Hydrophobic particles (% BVOB)** | 23 |
| **Weighting agent (% BVOB)** | 7 |
| **Silica (% BVOB)** | 34 |

| **Mixing Fluid** | |
|---|---|
| **Antifoam agent (L/tonne**)** | 4.45 |
| **Antisettling agent (%BWOB***)** | 0.50 |
| **Retarder (L/tonne)** | 35.6 |
| Gas **migration additive latex (L/tonne)** | 160 |
| **Weighting agent (% BWOB)** | 20 |

| | |
|---|---|
| * BVOB = by volume of solid blend; ** L/tonne of solid blend; BWOB = by weight of solid blend | |

In the Flex 1 blend, the hydrophobic particles were composed of acrylonitrile-butadiene rubber, present at a particle size range between 100 micrometers and 600 micrometers. Silica as a strength retrogression prevention agent was present in the form of both coarse crystalline particles having a particle size between 30 micrometers and 250 micrometers, and microfine amorphous particles having a particle size between 0.1 and 5.0 micrometers. The weight ratio of coarse to microfine silica was 2:1. The antifoam agent was a silicone or polypropylene glycol or both. The antifoam agent concentration was held constant at 4.45 L/tonne. The antisettling agent was a saccharide biopolymer. The retarder was a lignosulfonate. The gas migration additive latex was styrene butadiene latex. The weighting agent was Mn₃O₄, also known as the mineral hausmannite. With regard to the solid blend, a skilled person will appreciate that the foaming problem arises from the presence of the hydrophobic particles. The composition and particle size distribution of the cement and other solid additives have a lesser role in the context of foaming.

The results of a series of mixing tests are shown in Table 2. The blend addition time is listed as well as the slurry density measured with an atmospheric mud balance.

**Table 2. Blend addition times and slurry density measurements from Flex 1 compositions.**

| Test | Silicone Antifoam (L/tonne) | Polypropylene Glycol (MW = 4000) (L/tonne) | Blend Addition Time (s) | Measured Slurry Density (kg/m³) |
|---|---|---|---|---|
| 1A | 4.45 | - | 58 | 1820 |
| 1B | 1.51 | 3.02 | 45 | 1850 |
| 1C | - | 17.79 | 50 | 1920 |
| 1D | 17.79 | - | 45 | 1900 |
| 1E | 10.67 | 7.12 | 37 | 1920 |
| 1F | - | 31.13 | 52 | 1930 |
| 1G | 13.34 | 17.79 | 35 | 1945 |
| 1H | 17.79 | 13.34 | 35 | 1930 |

The results show that high concentrations of both antifoam agents were required to achieve a slurry density improvement. None of the compositions was able to achieve a slurry density equal to the theoretical slurry density of 2000 kg/m³. Nevertheless, these tests confirm a synergistic effect when both antifoam agents are present.

A comparative test was also performed wherein the standard API mixing procedure was employed. The measured slurry density after mixing was 1990 kg/m³. Thus, the standard API mixing procedure did not detect the foaming problem.

### EXAMPLE 2

Two test designs (Flex 2 and Flex 3) are shown in Table 3.

**Table 3. Compositions of Flex 1 and Flex 2 cement blends.**

| **Design** | **Flex 2** | **Flex 3** |
|---|---|---|
| **Density** | **1900 kg/m³** | |
| **SVF** | **52.2%** | |

| **Solid Blend** | | |
|---|---|---|
| **Class G cement (% BVOB*)** | 36 | |
| **Hydrophobic particles (% BVOB)** | 23 | |
| **Weighting agent (% BVOB)** | 7 | |
| **Silica (% BVOB)** | 34 | |

| **Mixing fluid** | | |
|---|---|---|
| **Antifoam agent** (L/tonne) | 26.7 | 4.45 |
| **Antisettling agent** (%BWOB) | 0.40 | |
| **Dispersant** (L/tonne) | 1.78 | |
| **Gas migration additive latex** (L/tonne) | 130 | 43 |
| **Fluid Loss Control Additive** (L/tonne) | - | 13.3 |
| **Retarder** (Ltonne) | 15.1 | |

The solid blends for Flex 2 and Flex 3 were the same as that of Flex 1 in Example 1; however, the mixing fluid compositions were different. The dispersant and retarder were based on lignosulfonates, and the fluid loss control additive was an AMPS/acrylamide copolymer.

The results of a series of mixing tests with the Flex 2 composition are shown in Table 4.

**Table 4. Blend addition times and slurry density measurements from Flex 2 compositions.**

| Test | Silicone Antifoam (L/tonne) | Polypropylene Glycol (MW = 4000) (L/tonne) | Blend Addition Time (s) | Measured Slurry Density (kg/m³) |
|---|---|---|---|---|
| 2A | 26.7 | - | 59 | 1780 |
| 2B | - | 26.7 | 55 | 1840 |
| 2C | 13.35 | 13.35 | 50 | 1850 |

In Tests 2A-2C, the total antifoam concentration was held constant at 26.7 L/tonne. As observed in Example 1, the combination of silicone and glycol antifoams was synergistic in terms of the blend addition time and the measured slurry density. A comparative test was performed using the API mixing procedure. The measured slurry density was 1860 kg/m³.

The results of a series of mixing tests with the Flex 3 composition are shown in Table 5.

**Table 5. Blend addition times and slurry density measurements from Flex 3 compositions.**

| Test | Silicone Antifoam (L/tonne) | Polypropylene glycol (L/tonne) | Blend Addition time (s) | Measured Slurry Density (kg/m³) |
|---|---|---|---|---|
| 2D | 4.45 | - | 74 | 1810 |
| 2E | - | 4.45 | 70 | 1850 |
| 2F | 1.51 | 2.94 | 56 | 1860 |

In Tests 2D-2F, the total antifoam concentration was held constant at 4.45 L/tonne. As observed in Example 1, the combination of silicone and glycol antifoams was synergistic in terms of the blend addition time and the measured slurry density.

### EXAMPLE 3

In this Example, the solid blend composition of Flex 1 was tested again; however, the antifoam system consisted of two silicones. One silicone was the same as that used in the previous examples; the other was an ether functionalized silicone antifoam (AGOCHEM AF 520, available from CHT Bezema, Tübingen, Germany). The antifoam compositions and test results are presented in Table 6.

**Table 6. Blend addition times and slurry density measurements from Flex 1 compositions containing two different silicone antifoam agents.**

| Test | Silicone Antifoam (L/tonne) | AGOCHEM AF520 (L/tonne) | Blend Addition Time (s) | Measured Slurry Density (kg/m³) |
|---|---|---|---|---|
| 3A | 4.45 | - | 58 | 1820 |
| 3B | 17.8 | - | 45 | 1900 |
| 3C | - | 8.9 | 30 | 1930 |
| 3D | - | 13.3 | 32 | 1940 |
| 3E | - | 17.8 | 35 | 1940 |
| 3F | - | 20.5 | 30 | 1960 |

The results indicate that the functionalized silicone antifoam is more effective than one used previously, both in terms of blend addition time and measured slurry density. The results also show how the disclosed mixing method can be used to identify the optimal antifoam concentration.

Although only a few example embodiments have been described in detail above, those skilled in the art will readily appreciate that many modifications are possible in the example embodiments without materially departing from this disclosure. Accordingly, all such modifications are intended to be included within the scope of this disclosure as defined in the following claims.

## Claims

1. A method for measuring air entrainment in a composition, comprising:
(i) providing a rotational blade mixer having a container;
(ii) adding an air entrainment suppressing agent to an aqueous fluid, thereby forming a mixing fluid with a known density and volume, and placing the mixing fluid in the container;
(iii) choosing a first rotational speed between 2000 RPM and 12,000 RPM, and operating the mixer such that the mixing fluid is exposed to at least 30,000 blade revolutions;
(iv) while maintaining the first rotational speed, introducing a solid blend comprising portland cement to the mixing fluid in the container, the blend having a know density and absolute volume;
(v) recording the time required for the blend to be dispersed homogeneously in the mixing fluid;
(vi) operating the mixer for 35 seconds at a second rotational speed of 12,000 RPM, thereby forming a slurry;
(vii) within one minute after the slurry is formed, performing a slurry density measurement with a mud balance at atmospheric pressure; and
(viii) comparing the slurry density measurement to a theoretical slurry density calculated from the known densities and volumes of the mixing fluid and solid blend.

2. The method of claim 1, wherein the air entrainment suppressing agent is a blend of a silicone and polypropylene glycol or a silicone that is functionalized with ether groups.

3. The method of claim 2, wherein the silicone/polypropylene glycol blend is present at a weight ratio between 80% silicone/20% polypropylene glycol and 20% silicone/80% polypropylene glycol.

4. The method of claim 2 or 3, wherein the wherein the silicone/polypropylene glycol blend is present at a concentration between 4 L/tonne of blend and 40 L/tonne of blend.

5. The method of any one of claims 2-4, wherein the functionalized silicone is present at a concentration between 2 L/tonne of blend and 35 L/tonne of blend.

6. The method of any one of claims 1-5, wherein the solid blend further comprises hydrophobic particles comprising one of more members selected from the list consisting of rubber particles, polyamides, polypropylene, acrylonitrile butadiene rubbers, polyethylene, styrene butadiene, uintaite, styrene isoprene styrene (SIS), styrene isoprene copolymer, styrene butadiene styrene (SBS), styrene divinylbenzene, fluoroelastomers, perfluoroelastomers, polyphenylene sulfide, polyether-etherketone, petroleum coke derivatives and coal.

7. The method of any one of claims 1-6, wherein the composition further comprises latexes or water soluble polymers or combinations thereof.

8. The method of claim 7, wherein the latexes comprise styrene butadiene latexes, carboxylated styrene butadiene latexes, styrene acrylate latexes, acrylic latexes, isoprene latexes or natural rubber latexes or combinations thereof.

9. The method of claim 7 or 8, wherein the water soluble polymers comprise cellulosic ethers, acrylates, polymers containing 2-acrylamido-2-methylpropane sulfonic acid and acrylamides polysaccharides, polyvinyl alcohols or crosslinked polyvinyl alcohols or combinations thereof.

10. The method of any one of claims 1-9, wherein the volume of the container is about 1 liter.

11. The method of any one of claims 1-10, wherein the solid blend is added to the container within a time period shorter than two minutes.

12. The method of any one of claims 1-9, wherein the mud balance is an atmospheric mud balance.

13. A method of formulating a portland cement slurry, comprising:
(i) designing a first slurry composition that contains an antifoam agent, the antifoam agent being either polypropylene glycol or a silicone;
(ii) measuring air entrainment in the first slurry composition during mixing, the measurement comprising:
(a) providing a rotational blade mixer having a container;
(b) adding the antifoam agent to an aqueous fluid, thereby forming a mixing fluid with a known density and volume, and placing the mixing fluid in the container;
(c) choosing a rotational speed between 2000 RPM and 12,000 RPM, and operating the mixer such that the mixing fluid is exposed to at least 30,000 blade revolutions;
(d) while maintaining the first rotational speed, introducing a solid blend comprising portland cement to the mixing fluid in the container, the blend having a known density and absolute volume;
(e) recording the time required for the blend to be dispersed homogeneously in the mixing fluid;
(f) operating the mixer for 35 seconds at 12,000 RPM rotational speed, thereby forming a slurry;
(g) within one minute after the slurry is formed, performing a slurry density measurement with a mud balance at atmospheric pressure; and
(h) comparing the slurry density measurement to a theoretical slurry density calculated from the known densities and volumes of the mixing fluid and solid blend;
(iii) designing a second slurry composition that contains an air entrainment suppressing agent, the air entrainment suppressing agent being a blend of polypropylene glycol and a silicone, or a silicone that is functionalized with ether groups;
(iv) measuring air entrainment in the second slurry composition according to the procedure of step (ii), wherein the antifoam agent is replaced by the air entrainment suppressing agent;
(v) comparing the air entrainments of the first and second slurry compositions; and
(vi) if the air entrainment of the second slurry exceeds a desired amount, modifying the concentration of the air entrainment suppressing agent and repeating steps (iv) and (v) until the air entrainment is less than or equal to the desired amount.

14. The method of claim 13, wherein the wherein the silicone/polypropylene glycol blend is present at a concentration between 4 L/tonne of blend and 40 L/tonne of blend.

15. The method of claim 13 or 14, wherein the functionalized silicone is present at a concentration between 2 L/tonne of blend and 35 L/tonne of blend.
